# EUROPÄISCHE PATENTSCHRIFT

(11) **EP 3 156 295 B1**
(45) Veröffentlichungstag und Bekanntmachung des Hinweises auf die Patenterteilung: **10.10.2018**
(21) Anmeldenummer: 16001903.0
(22) Anmeldetag: 31.08.2016
(51) Int. Cl.: B60T 17/00

(54) **VORRICHTUNG ZUR LÖSBAREN BEFESTIGUNG EINER TROCKENMITTELPATRONE AN EINEM GEHÄUSE EINER DRUCKLUFTAUFBEREITUNGSANLAGE EINES FAHRZEUGS**
DEVICE FOR REMOVABLY ATTACHING A DESICCANT CARTRIDGE ON A HOUSING OF A COMPRESSED AIR TREATMENT SYSTEM OF A VEHICLE
DISPOSITIF DE FIXATION AMOVIBLE D'UNE CARTOUCHE D'AGENT SICCATIF SUR UN BOITIER D'UNE INSTALLATION DE TRAITEMENT D'AIR COMPRIME D'UN VEHICULE AUTOMOBILE

(30) Priorität: 16.10.2015 DE 102015013492
(43) Veröffentlichungstag der Anmeldung: 19.04.2017
(60) Teilanmeldung: 18186766.4
(73) Patentinhaber: MAN Truck & Bus AG, 80995 München (DE)
(72) Erfinder: Kaupert, Oliver, 80995 München (DE); Kolland, Wolfgang, 81245 München (DE); Haslberger, Georg, 84437 Reichertsheim (DE); Hofstetter, Thomas, 84048 Mainburg (DE)
(74) Vertreter: v. Bezold & Partner Patentanwälte - PartG mbB

(56) Entgegenhaltungen:
- DE-A1- 19 721 230
- DE-A1-102006 037 311
- DE-U1- 8 518 993
- US-A- 5 110 327
- US-A- 5 374 401

## Beschreibung

Die Erfindung betrifft eine Vorrichtung zur lösbaren Befestigung einer Trockenmittelpatrone an einem Gehäuse einer Druckluftaufbereitungsanlage eines Fahrzeugs, insbesondere eines Nutzfahrzeugs.

Druckluftsysteme - insbesondere in Nutzfahrzeugen - benötigen nachgeschaltet zum Luftpresser eine sogenannte Luftaufbereitungsanlage. Darin wird die Luft u. a. getrocknet und gefiltert, und es werden Ölbestandteile abgeschieden. Diese Vorgänge finden alle in einer sogenannten Trockenmittelpatrone statt, die, grob gesagt, aus einer Bodenplatte mit Öffnungen zur Durchströmung der Luft und einem becher- oder topfförmigen Deckel besteht, die fest miteinander verbunden sind. Darin befindet sich ein feuchtigkeitsadsorbierendes Granulat, das der durchströmenden Luft die Feuchtigkeit entzieht. Dieses Granulat hat beim Einsatz im Nutzfahrzeug nur eine begrenzte Lebensdauer. Ein Grund hierfür ist, dass sich der in der Druckluft enthaltene Ölnebel auf dem Granulat absetzt und so die für die Feuchtigkeitsaufnahme effektive Oberfläche reduziert. Ferner kann sich das Granulat durch die Rüttelbeanspruchung mechanisch zersetzen. Die Trockenmittelpatrone muss daher regelmäßig getauscht werden.

Typischerweise ist dafür die Patrone mit einem Mutterngewinde in der Bodenplatte versehen. So lässt sich die verbrauchte Patrone ab- und eine neue Patrone auf ein Außengewinde am Gehäuse der Druckluftaufbereitungsanlage, z. B. am Lufttrocknergehäuse, aufschrauben. Meist wird ein Vierkantdichtring verwendet, der durch die Verschraubung axial verpresst wird, so abdichtet und gleichzeitig die axiale Verspannung der Verschraubung sicherstellt. Derartige Trockenmittelpatronen sind beispielsweise aus den Offenlegungsschriften DE 10 2013 103 066 A1, DE 10 2012 105 137 A1 sowie der DE 10 2007 034 435 A1 bekannt.

Abhängig vom Einbauort der Druckluftaufbereitungsanlage ist oft die Zugänglichkeit der Patrone beim Wechsel eingeschränkt. Die Patrone ist immer oben auf dem Gehäuse der Druckluftaufbereitungsanlage befestigt, deswegen wäre die optimale Zugangsrichtung für den Patronentausch von oben. Diese Freigängigkeit ist aber nicht immer gegeben, bedingt durch Aufbauten bei LKWs oder generell bei Bussen. Außerdem wird oft von unten her gearbeitet, wenn das Fahrzeug in der Werkstatt auf der Grube steht.

Es gibt heute teilweise sehr festsitzende Patronen, bei denen die vorgegebenen Servicezeiten für den Patronentausch in der Werkstatt nicht eingehalten werden können. Man benötigt ein sehr hohes Lösemoment, welches trotz Hilfsmittel, wie z. B. einem Spanngurt mit einem langen Hebel, schwer aufgebracht werden kann, weil der seitliche Freiraum für den Einsatz eines Hebels nicht gegeben ist.

Weil sich das Dichtelement, typischerweise ein Vierkantdichtring, bei den aus der Praxis bekannten Befestigungen zwischen Patronenbodenplatte und Gehäuse der Druckluftaufbereitungseinheit beim Verschrauben mitdrehen muss, kommt es zu großen Schwankungen durch unterschiedliche Reibungseinflüsse beim Anzugsmoment und zur Beschädigung oder zum Verdrehen des Dichtelements, was wiederum Leckagen zur Folge hat. Außerdem muss die axiale Verspannung der Verschraubung durch die Dichtung erzeugt werden.

Aus der Offenlegungsschrift DE 197 21 230 A1 ist eine Gastrocknerpatrone für eine Trocknungsvorrichtung bekannt, der bei Einlass und Auslass als zueinander koaxiale Stutzen ausgebildet sind, die mittels Steckverbindung an die Trocknungsvorrichtung anschließbar sind, wobei der außenliegende Stutzen mit dem Gehäuse und der innenliegende Stutzen mit dem Einsatz verbunden ist.

Es ist somit eine Aufgabe der Erfindung, eine verbesserte Möglichkeit bereitzustellen, um eine Trockenmittelpatrone an einem Gehäuse einer Luftaufbereitungsanlage lösbar befestigen zu können, mit der Nachteile herkömmlicher Techniken vermieden werden können. Die Aufgabe der Erfindung ist es insbesondere, eine Befestigungsschnittstelle für eine Trockenmittelpatrone bereitzustellen, mittels derer die Patrone gegen ein Gehäuse der Luftaufbereitungsanlage, z. B. des Lufttrockners, abgedichtet befestigt und sicher und zuverlässig mit konstantem Kraftaufwand wieder gelöst werden kann.

Diese Aufgaben werden durch eine Vorrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird eine Vorrichtung zur lösbaren Befestigung einer Trockenmittelpatrone an einem Gehäuse einer Druckluftaufbereitungsanlage bzw. Lufttrocknungsanlage eines Fahrzeugs bereitgestellt. Die Vorrichtung stellt eine Schnittstelle bereit, um die Trockenmittelpatrone lösbar am Gehäuse zu befestigen. Das Gehäuse kann beispielsweise ein Gehäuse des Lufttrockners sein. Die Druckluftaufbereitungsanlage kann für eine Druckluftbremsanlage eines Fahrzeugs vorgesehen sein. Das Fahrzeug kann ein Nutzfahrzeug sein.

Die Trockenmittelpatrone, auch als Trocknungspatrone bezeichnet, umfasst in an sich bekannter Weise ein Patronengehäuse, in dem ein Trockenmittelbehälter gehaltert ist. Das Patronengehäuse hat einen Deckel, welcher das Patronengehäuse nach oben begrenzt und typischerweise becher- oder topfförmig ist, und ein Trägerelement, welches das Patronengehäuse nach unten begrenzt. Das Trägerelement ist in Montageposition am Gehäuseabschnitt der Druckluftaufbereitungsanlage lösbar befestigt und wird nachfolgend auch als Patronenboden bezeichnet. Der Patronenboden umfasst ein Bördelblech (auch als Bördelplatte bezeichnet), um den Patronenboden am Patronendeckel durch eine Bördelung zu befestigen. Der am Patronenboden umlaufende Bereich, an dem der Patronenboden mit dem Patronendeckel verbördelt ist, bildet den sogenannten Patronenfalz.

Erfindungsgemäß wird eine Befestigungsvorrichtung vorgeschlagen, die ohne die herkömmliche zentrale Verschraubung, bei der das Patronengehäuse an einem die Trockenmittelpatrone axialmittig durchsetzenden Außengewinde des Gehäuseabschnitts verschraubt wird, auskommt.

Stattdessen sieht die Erfindung vor, dass eine Bördelung am Patronenboden so ausgeführt ist, dass eine Anlagefläche für eine axiale Einspannung entsteht, insbesondere eine in Montageposition radial ausgerichtete Anlagefläche. Darüber hinaus sieht die Erfindung vor, dass eine Einstecköffnung am Gehäuse der Druckluftaufbereitungsanlage vorhanden ist, in die die Bördelung zumindest abschnittsweise einsteckbar ist und in der die Bördelung im eingesteckten Zustand durch Formschluss in Axialrichtung gesichert ist. Die Anlagefläche liegt dann im eingesteckten Zustand an einer korrespondierenden Anlagefläche der Einstecköffnung an und/oder auf. Der in die Einstecköffnung einsteckbare gebördelte Abschnitt ist zumindest zweilagig.

Die Bördelung, die zum axialen Einspannen genutzt wird, umfasst vorzugsweise eine Bördelung des Bördelblechs des Patronenbodens und somit gemäß dieser Variante mindestens zwei gebogene Lagen des Bördelblechs. Eine Bördelung ist ein durch Biegen umgeformter Abschnitt eines Bördelblechs.

Die vorgeschlagene Schnittstellenvorrichtung bildet somit eine Steckverbindung zur lösbaren Montage der Trockenmittelpatrone aus, so dass die Trockenmittelpatrone lediglich durch einen Formschluss am Gehäuse der Luftaufbereitungsanlage befestigbar ist.

Die Einstecköffnung kann beispielsweise als Ausnehmung, Einstecktasche des Gehäuses der Luftaufbereitungsanlage oder durch einen Bügel, der eine Aufnahmeöffnung festlegt, ausgeführt sein. Die Bördelung ist vorzugsweise in Radialrichtung in die Einstecköffnung einsteckbar. Die Radialrichtung liegt in der Ebene der Bodenplatte der Trockenmittelpatrone, d. h., die möglichen Radialrichtungen werden durch die Ebene der Bodenplatte der Trockenmittelpatrone aufgespannt. Die Radialrichtung ist ferner senkrecht zur Axialrichtung, wobei die Axialrichtung der Richtung der Verschraubungsachse bzw. der senkrecht auf dem Patronenboden stehenden Zentralachse der Trockenmittelpatrone entspricht.

Durch den Entfall der zentralen Verschraubung ergeben sich folgende Vorteile im Betrieb: Aufgrund des fehlenden Gewindes erfolgt keine Spanbildung beim Auffädeln der Patrone. Die durch die Verschraubung sonst mögliche Beschädigung des Dichtelements wird vermieden, so dass das Auftreten von Leckagen und Fehlfunktionen im Druckluft- und insbesondere Bremssystem durch Fremdpartikel, die beim Patronentausch eingetragen wurden, vermieden werden können. Ferner kann eine größere Servicefreundlichkeit beim Patronentausch erzielt werden. Ein Grund hierfür ist, dass ein zwischen Patronenboden und Gehäuse der Druckluftaufbereitungsanlage angeordnetes Dichtelement, z. B. ein Vierkantdichtring, sich bei der Montage der Patrone nicht mitdrehen muss, so dass Schwankungen durch unterschiedliche Reibungseinflüsse beim Anzugsmoment, Beschädigungen oder Verdrehen des Dichtelements vermieden werden können. Ferner kann die Schmierung des Dichtelements damit ebenfalls entfallen. Dadurch können chemische Schäden der Dichtung bedingt durch die Verwendung falscher Schmierstoffe vermieden werden. Ein weiterer Vorteil ist, dass durch den Entfall des zentralen Gewindes die Bodenplatte nicht mehr so massiv ausfallen muss und so eine Gewichtseinsparung von ca. 0,5 kg bei der Patrone erzielt werden kann. Ferner kann die Patrone frei drehbar aufs Gehäuse aufgesetzt werden. Damit kann künftig auch gewährleistet werden, dass das eine Beschriftung, z. B. ein Markenlogo, und/oder Betriebsangaben auf der Patrone immer in die gleiche Richtung orientiert sind, beispielsweise zur Fahrzeugaußenseite, wo sie gut sichtbar sind. Das kann mit der bisher geschraubten Patrone nicht sichergestellt werden.

Die Verwendung einer Bördelung am Patronenboden zur Ausbildung der Steckverbindung bietet ferner den besonderen Vorzug, dass keine weiteren zusätzlichen Bauteile, wie beispielsweise ein Bajonett-Ring etc., zur Ausbildung einer formschlüssigen Verbindung vonnöten sind.

Gemäß einer bevorzugten Ausführungsform ist die in die Einstecköffnung einsteckbare Bördelung der gebördelte Verbindungsfalz zwischen Patronenboden und Patronengehäuse, d. h. der Patronenfalz, der das Patronengehäuse am Patronenboden befestigt. Vorzugsweise wird der Verbindungsfalz hierzu etwas breiter als üblich ausgeführt wird, um durch den verbreiterten Verbindungsfalz eine ausreichend große radiale Anlagefläche auszubilden. Gemäß dieser Ausführungsform ist der Patronenfalz in die am Gehäuse angeordnete Einstecköffnung steckbar und im eingesteckten Zustand durch Formschluss in Axialrichtung gesichert.
Gemäß einer vorteilhaften Variante dieser Ausführungsform ist der verbreiterte Patronenfalz um 90° Grad weniger nach oben gebördelt als herkömmliche Patronenfalze. Mit anderen Worten weist der Verbindungsfalz gemäß dieser Variante eine U-förmige Bördelung des Bördelblechs des Patronenbodens auf, insbesondere eine U-förmige Bördelung des radial äußeren Endbereichs des Bördelblechs, und einen in der U-förmigen Bördelung angeordneten Stehfalz des Patronengehäusedeckels, d. h. einen um 90° gebördelten Endabschnitt des Patronengehäusedeckels. Die Schenkel der U-förmigen Bördelung erstrecken sich hierbei in Radialrichtung, d. h. parallel zur Ebene des Patronenbodens. Diese Variante bietet den besonderen Vorzug, dass nur eine geringfügige Anpassung bei der Herstellung des Patronenfalzes vonnöten ist, um den Patronenfalz zu verbreitern.

Die erfindungsgemäße Verbindung sieht ebenfalls eine Verbreiterung des Verbindungsfalzes zwischen Patronenboden und Patronengehäuse vor, die jedoch durch eine sich radial erstreckende Bördellasche gebildet ist, die den gebördelten Bereich zwischen Patronenboden und Patronengehäuse, d. h. den herkömmlichen Patronenfalz, umfangsseitig umgibt und durch eine 180°-Bördelung des Bördelblechs des Patronenbodens gebildet ist, bevor dieses mit dem Patronengehäuse verbördelt ist. Hierbei ist die Einstecköffnung so angeordnet, dass die Bördellasche zumindest abschnittsweise in die Einstecköffnung einsteckbar ist. Für die axiale Einspannung wird somit lediglich eine zweilagige Bördelung des Bördelblechs des Patronenbodens verwendet. Im Unterschied zu der vorherigen Variante wird die Falzverbreiterung nur durch das Bördelblech der Bodenplatte gebildet, ohne eine zusätzliche Lage des Patronendeckels. Diese Variante bietet ebenfalls den Vorzug, dass eine vorhandene Komponente, hier das Bördelblech des Patronenbodens, verwendet wird, um eine Verbreiterung des Patronenfalzes zu realisieren. Die zusätzliche Bördellasche ist herstellungstechnisch einfach und mit geringem Materialmehraufwand umsetzbar.

Gemäß der Erfindung bildet das Bördelblech des Patronenbodens eine hakenförmige und/oder rechtwinklige, vorzugsweise zweilagige, Bördelung aus, mit einem ersten Abschnitt, der sich in Axialrichtung vom Patronendeckel wegerstreckt, und einem sich daran anschließenden zweiten Abschnitt, der sich in Radialrichtung erstreckt, wobei die zweite Einstecköffnung so am Gehäuse angeordnet ist, dass der zweite Abschnitt in diese einsteckbar ist und im eingesteckten Zustand die Patrone durch Formschluss in Axialrichtung sichert. Gemäß dieser Ausführungsform ist das Bördelblech des Patronenbodens nach Ausbildung der hakenförmigen Bördelung mit dem Patronendeckel zum Patronenfalz verbördelt. Diese Variante ist besonders geeignet, wenn im Bereich des Patronenfalzes wenig zusätzlicher radialer Bauraum zur Ausbildung einer Falzverbreiterung bzw. Anlagefläche vorhanden ist.

Gemäß einer weiteren Maßnahme kann die zumindest abschnittsweise in die Einstecköffnung einsteckbare Bördelung eine Verdrehsicherung aufweisen. Die Verdrehsicherung kann beispielsweise durch ein Loch in der Bördelung und durch ein in dem Loch sitzendes Verriegelungselement, insbesondere einen Verriegelungsstift, z. B. eine Schraube oder einen Bolzen, gebildet sein. Die Verdrehsicherung kann auch als abschnittsweise Abplattung der Bördelung ausgeführt ist, d. h., die Kontur der umfangsseitig bzw. in Radialrichtung umlaufenden Bördelung ist an zumindest einer Stelle nicht kreisförmig gekrümmt, sondern beispielsweise gerade. Die Verdrehsicherung kann beispielsweise am Patronenfalz, insbesondere außen am Patronenfalz, angeordnet sein und damit auch in Radialrichtung außerhalb eines zwischen Patronengehäuse und Luftaufbereitungsanlagengehäuse angeordneten Dichtelements. Dies bietet ferner den Vorteil, dass die Verdrehsicherung nicht durch eine axiale Verspannung des Dichtelements erzeugt werden muss und das Dichtelement daher so angeordnet werden kann, dass es bei der Montage der Trockenmittelpatrone nicht verdreht werden muss.

Die Erfindung betrifft ferner ein Kraftfahrzeug, insbesondere ein Nutzfahrzeug, mit einer Vorrichtung wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Detailansicht im Schnitt einer Vorrichtung gemäß einem Ausführungsbeispiel nicht Teil der Erfindung;
- Figur 2: eine Detailansicht im Schnitt einer Vorrichtung gemäß der Erfindung;
- Figur 3: eine schematische Draufsicht auf eine Trockenmittelpatrone gemäß einem weiteren Ausführungsbeispiel der Erfindung;
- Figur 4: eine schematische Draufsicht auf eine Trockenmittelpatrone gemäß einem weiteren Ausführungsbeispiel der Erfindung; und
- Figur 5: eine weitere

Detailansicht im Schnitt einer Vorrichtung gemäß der Erfindung.

Gleiche Elemente sind in allen Figuren mit denselben Bezugszeichen bezeichnet.

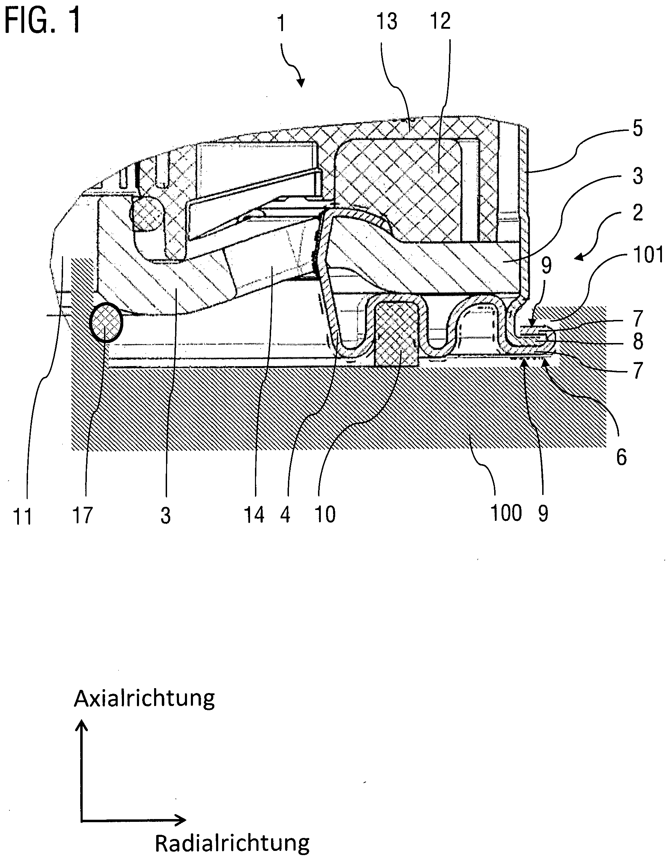

Figur 1 zeigt hierbei eine Detailansicht im Schnitt einer Trockenmittelpatrone gemäß einem Ausführungsbeispiel nicht Teil der Erfindung. Figur 1 zeigt insbesondere einen Ausschnitt eines radial außenliegenden unteren Bereichs einer Trockenmittelpatrone 1. Der innere Aufbau der Trockenmittelpatrone 1 kann in an sich bekannter Weise ausgeführt sein, beispielsweise wie in den Offenlegungsschriften DE 10 2013 103 066 A1, DE 10 2012 105 137 A1 sowie der DE 10 2007 034 435 A1 beschrieben. Mit dem Bezugszeichen 12 ist z. B. der durch ein Vlies gebildete Ölfilter bezeichnet und mit dem Bezugszeichen 13 der Innenbehälter für das Trockenmittel, von dem nur ein kleiner Teil sichtbar ist. Der vertikale Pfeil in Figur 1 gibt die Axialrichtung der Trockenmittelpatrone an, der horizontale Pfeil die Radialrichtung der Trockenmittelpatrone.

Das Patronengehäuse der Trockenmittelpatrone hat in an sich bekannter Weise einen topf- oder becherförmigen Patronengehäusedeckel 5, nachfolgend auch kurz als Deckel bezeichnet, welcher das Patronengehäuse nach oben begrenzt, und einen Patronenboden 2, welches das Patronengehäuse nach unten begrenzt.

Der Patronenboden 2 ist ebenfalls, wie in den Offenlegungsschriften DE 10 2013 103 066 A1, DE 10 2012 105 137 A1 sowie der DE 10 2007 034 435 A1 beschrieben, aus einer Trägerplatte 3 und einem Bördelblech 4 gebildet, wobei die Befestigung zwischen Trägerplatte 4 und dem topfförmigen Patronengehäusedeckel 5 der Trockenmittelpatrone über das Bördelblech 4 erfolgt, indem der Patronengehäusedeckel 5 und das Bördelblech 4 miteinander verbördelt werden und dadurch den umlaufenden Patronenfalz 6 ausbilden. Das Trägerelement weist eine zentrale Ausströmöffnung 11 auf, über die die getrocknete und gereinigte Luft die Trockenmittelpatrone verlässt. Ferner ist in Figur 1 die Lufteinströmöffnung 14 in der Trägerplatte 3 erkennbar. Ferner ist ein Dichtring 10 in einer Dichtungsnut angeordnet, der zur Abdichtung des Patronengehäuses gegenüber dem Gehäuse der Luftaufbereitungsanlage im montierten Zustand dient. Die Dichtungsnut ist durch eine Bördelung des Bördelblechs 4 geformt. Ein weiteres Dichtelement 17 umgibt am Patronenboden 3 die Ausströmöffnung 11, um eine Abdichtung zwischen der ungefilterten Luft außen und der gereinigten Luft aus dem Innern der Trockenmittelpatrone auszubilden.

Die Besonderheit dieser Ausführungsvariante liegt einerseits darin, dass der Patronenfalz 6 um 90° Grad weniger nach oben gebördelt ist als ein herkömmlicher Patronenfalz und dadurch etwas verbreitert ist. Mit anderen Worten weist der Verbindungsfalz 6 gemäß dieser Variante eine U-förmige Bördelung des radial äußeren Endbereichs des Bördelblechs 4 auf, mit den beiden Schenkeln 7 der U-förmigen Bördelung. In der U-förmigen Bördelung ist ein Stehfalz 8 des Patronengehäusedeckels 5, d. h. ein um 90° gebördelter Endabschnitt des Patronengehäusedeckels 5, angeordnet.

Durch diese Ausführung des Patronenfalzes 6 bilden die Schenkel 7 des Bördelblechs 4 jeweils eine Anlagefläche 9 aus.

Eine weitere Besonderheit dieser Ausführungsvariante liegt darin, dass das Gehäuse 100 der Druckluftaufbereitungsanlage, z. B. das Lufttrocknergehäuse, an der Montagestelle für die Trockenmittelpatrone 1 eine Einstecköffnung 101 aufweist, in die der verbreiterte Patronenfalz zumindest abschnittsweise in Radialrichtung einsteckbar ist und im eingesteckten Zustand durch Formschluss in Axialrichtung gesichert ist, da die Anlageflächen 9 durch die Innenwände der Einstecköffnung 101 gesichert sind. Die Einstecköffnung ist somit so angeordnet und dimensioniert, dass ein Bereich des Patronenfalzes 6 darin aufgenommen werden kann. Es können auch zwei oder mehrere derartige Einstecköffnungen 101 in Umfangsrichtung des Falzes 6 vorgesehen sein.

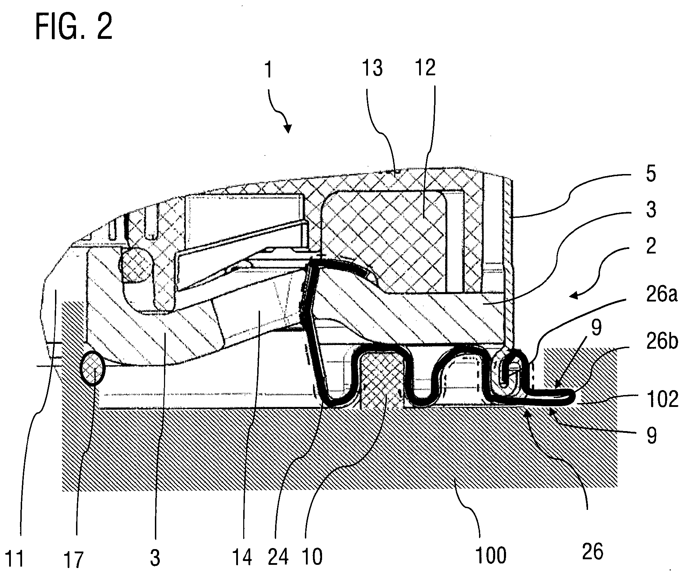

Figur 2 zeigt eine Detailansicht im Schnitt einer Vorrichtung gemäß der Erfindung. Hierbei entsprechen Komponenten mit gleichen Bezugszeichen den Komponenten der Figur 1 und werden nicht gesondert beschrieben.

Im Unterschied zu der Figur 1 ist der Bereich 26a des Patronenfalzes, an dem der Patronengehäusedeckel 5 und das Bördelblech 24 miteinander verbördelt sind, um 90° Grad mehr gebördelt als der Patronenfalz 6 in Figur 1, entsprechend einem an sich bekannten Patronenfalz. Die Besonderheit dieser Variante ist, dass der Patronenfalz durch eine sich radial erstreckende Bördellasche 26b verbreitet ist. Die Bördellasche 26b umgibt umfangsseitig den Bereich 26a des Patronenfalzes, an dem der Patronengehäusedeckel 5 und das Bördelblech 24 miteinander verbördelt sind, d. h. den gebördelten Bereich 26a zwischen Patronenboden 2 und Patronengehäusedeckel 5, d. h. den herkömmlichen Patronenfalz, und ist durch eine 180°-Bördelung des Bördelblechs 24 des Patronenbodens 2 gebildet, bevor das Bördelblech 24 mit dem Patronengehäusedeckel 5 verbördelt ist.

Das Gehäuse 100 der Luftaufbereitungsanlage weist wiederum eine Einstecköffnung 102 auf, die so angeordnet und dimensioniert ist, dass die Bördellasche 26b zumindest abschnittsweise in die Einstecköffnung 102 einsteckbar ist. Für die axiale Einspannung wird somit lediglich eine zweilagige Bördelung (in Form der Bördellasche) des Bördelblechs 24 des Patronenbodens 2 verwendet.

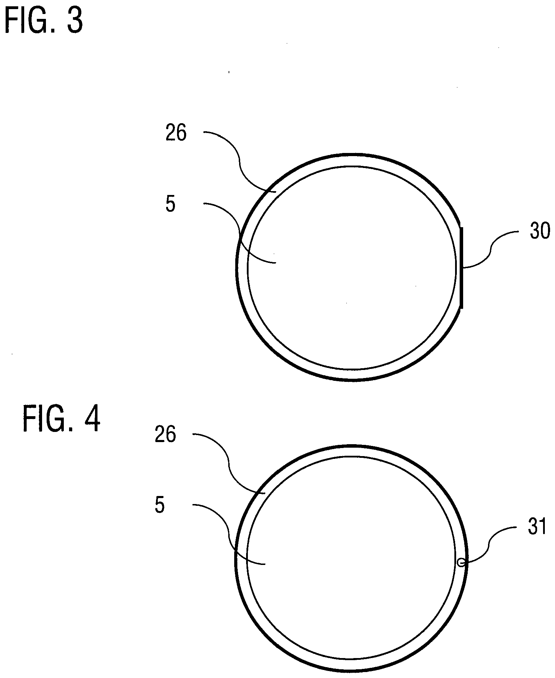

Figur 3 zeigt eine schematische Draufsicht auf eine Trockenmittelpatrone zur Illustration einer Verdrehsicherung gemäß einem weiteren Ausführungsbeispiel der Erfindung. Mit dem Bezugszeichen 26 ist wiederum der am Bodenbereich der Trockenmittelpatrone aus dem Patronengehäusedeckel 5 in Radialrichtung herausragende verbreiterte Patronenfalz bezeichnet. Der Patronenfalz kann auch gemäß dem Patronenfalz 6 in Figur 1 ausgeführt sein. Zur Ausbildung einer Verdrehsicherung weist der Patronenfalz 26 eine abschnittsweise Abplattung 30 auf, die im in der Einstecköffnung 102 eingesteckten Zustand an einer planen Rückwand der Einstecköffnung 102 anliegt und somit eine Verdrehsicherung ausbildet.

Eine alternative Variante ist in Figur 4 gezeigt. Zur Ausbildung einer Verdrehsicherung weist der Patronenfalz 26 ein Loch 31 auf, in das ein stiftförmiges Verriegelungselement, z. B. eine Schraube, eingebracht wird, um die Trockenmittelpatrone in der Montageposition gegen eine Verdrehung zu sichern.

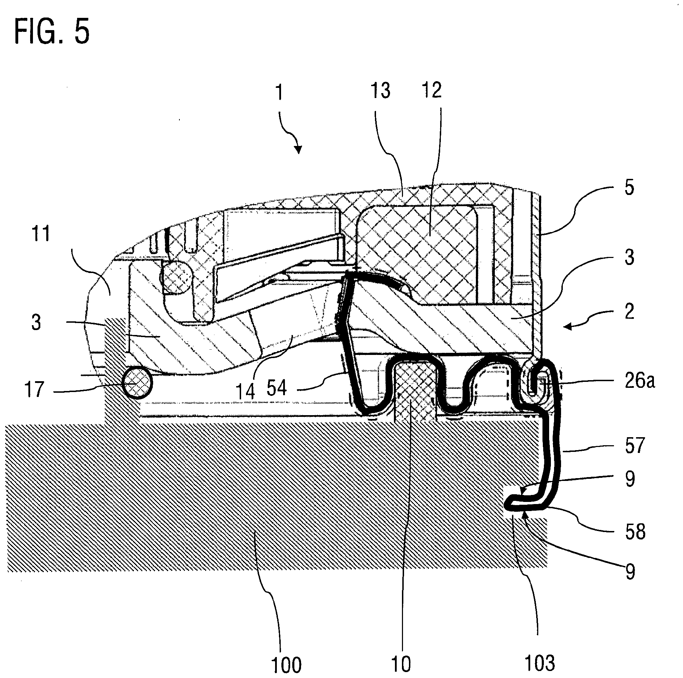

Figur 5 zeigt eine weitere Detailansicht der Erfindung. Hierbei entsprechen Komponenten mit gleichen Bezugszeichen den Komponenten der Figur 1 und Figur 2 und werden nicht gesondert beschrieben.

Eine Besonderheit dieses Ausführungsbeispiels liegt darin, dass das Bördelblech 54 des Patronenbodens eine hakenförmige, zweilagige Bördelung 57, 58 ausbildet, mit einem ersten Abschnitt 57, der sich in Axialrichtung ausgehend vom Patronenfalz, d. h. dem Bereich 26a des Patronenfalzes, an dem der Patronengehäusedeckel 5 und das Bördelblech 24 miteinander verbördelt sind, vom Patronendeckel wegerstreckt, und einem sich daran anschließenden zweiten Abschnitt 58, der sich in Radialrichtung nach innen, d. h. radial in Richtung zur Patronenmitte, erstreckt.

Die Einstecköffnung 103 ist so am Gehäuse 100 der Luftaufbereitungsanlage angeordnet, dass der zweite Abschnitt 58 in diese einsteckbar ist und im eingesteckten Zustand die Patrone durch Formschluss in Axialrichtung sichert. Das Bördelblech 54 des Patronenbodens 2 ist nach Ausbildung der hakenförmigen Bördelung 57, 58 mit dem Patronengehäusedeckel 5 zum Patronenfalz verbördelt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Trockenmittelpatrone
- 2: Patronenboden
- 3: Trägerplatte
- 4, 24, 54: Bördelblech
- 5: Patronengehäusedeckel
- 6, 26: Verbindungsfalz, insbesondere Patronenfalz
- 7: Schenkel der U-förmigen Bördelung
- 8: Stehfalz
- 9: Anlagefläche
- 10: Dichtring
- 11: Ausströmöffnung
- 12: Ölfilter
- 13: Trockenmittelbehälter
- 14: Einströmöffnung
- 17: Dichtelement
- 26a: Bereich des Patronenfalzes
- 26b: Bördellasche als Teil einer Börderlung
- 30: Abplattung
- 31: Loch
- 57: Axialer Abschnitt der hakenförmigen Bördelung
- 58: Radialer Abschnitt der hakenförmigen Bördelung
- 100: Gehäuse
- 101, 102, 103: Einstecköffnung

## Patentansprüche

1. Vorrichtung zur lösbaren Befestigung einer Trockenmittelpatrone (1) an einem Gehäuse (100) einer Druckluftaufbereitungsanlage eines Fahrzeugs, insbesondere eines Nutzfahrzeugs, umfassend
eine Bördelung (6; 26b; 57, 58) am Patronenboden (2) der Trockenmittelpatrone (1), die eine Anlagefläche (9) aufweist; und
eine Einstecköffnung (101; 102; 103) am Gehäuse (100) der Druckluftaufbereitungsanlage, in die die Bördelung (6; 26b; 57, 58) zumindest abschnittsweise einsteckbar ist und im eingesteckten Zustand durch Formschluss in Axialrichtung gesichert ist;
**dadurch gekennzeichnet,**
a) **dass** eine Verbreiterung des Verbindungsfalzes (26) zwischen Patronenboden (2) und Patronengehäusedeckel (5) vorgesehen ist, gebildet durch eine sich radial erstreckende Bördellasche (26b), die den gebördelten Bereich (26a) zwischen Patronenboden (2) und Patronengehäusedeckel (5) umfangsseitig umgibt und durch eine 180°-Bördelung des Bördelblechs (4) des Patronenbodens (2) gebildet ist, wobei die Einstecköffnung (102) so angeordnet ist, dass die Bördellasche (26b) zumindest abschnittsweise in die Einstecköffnung (102) einsteckbar ist; oder
b) **dass** ein Bördelblech (54) des Patronenbodens eine hakenförmige Bördelung (57, 58) ausbildet, mit einem ersten Abschnitt (57), der sich in Axialrichtung vom Patronengehäusedeckel (5) wegerstreckt, und einem sich daran anschließenden zweiten Abschnitt (58), der sich in Radialrichtung erstreckt, wobei die Einstecköffnung (103) so am Gehäuse (100) angeordnet ist, dass der zweite Abschnitt (58) in diese einsteckbar ist und im eingesteckten Zustand die Patrone durch Formschluss in Axialrichtung sichert.

2. Vorrichtung nach einem der vorhergehenden Ansprüchen, **dadurch gekennzeichnet, dass** die zumindest abschnittsweise in die Einstecköffnung einsteckbare Bördelung eine Verdrehsicherung (30, 31) aufweist.

3. Vorrichtung nach Anspruch 2, **dadurch gekennzeichnet, dass** die Verdrehsicherung durch ein Loch (31) in der Bördelung und ein in dem Loch (31) sitzenden Verriegelungselement, insbesondere einen Verriegelungsstift, gebildet ist.

4. Vorrichtung nach Anspruch 3, **dadurch gekennzeichnet, dass** die Verdrehsicherung als abschnittsweise Abplattung (30) der Bördelung ausgeführt ist.

5. Vorrichtung nach einem der vorhergehenden Ansprüche, **dadurch gekennzeichnet,**
(a) **dass** die Trockenmittelpatrone lediglich durch einen Formschluss am Gehäuse der Luftaufbereitungsanlage befestigbar ist; und/oder
(b) **dass** die Trockenmittelpatrone kein Gewinde, insbesondere kein am Patronenboden angeordnetes Gewinde, aufweist, um die Patrone am Gehäuse der Luftaufbereitungsanlage zu verschrauben.

6. Kraftfahrzeug, insbesondere Nutzfahrzeug, mit einer Vorrichtung nach einem der vorhergehenden Ansprüche.

## Claims

1. Device for the detachable fastening of a drying agent cartridge (1) to a housing (100) of a compressed-air treatment installation of a vehicle, in particular of a utility vehicle, comprising
a crimped formation (6; 26b; 57, 58) on the cartridge base (2) of the drying agent cartridge (1), which crimped formation has an abutment surface (9);
and an insertion
opening (101; 102; 103) on the housing (100) of the compressed-air treatment installation, into which insertion opening the crimped formation (6; 26b; 57, 58) can be inserted at least in sections and, in the inserted state, is secured in an axial direction by way of a form fit;
**characterized**
a) **in that** a widening of the connecting seam (26) between cartridge base (2) and cartridge housing cover (5) is provided, formed by a radially extending crimped lug (26b) which circumferentially surrounds the crimped region (26a) between cartridge base (2) and cartridge housing cover (5) and is formed by a 180° crimped formation of the crimped plate (4) of the cartridge base (2), wherein the insertion opening (102) is arranged such that the crimped lug (26b) can be inserted at least in sections into the insertion opening (102); or
b) **in that** a crimped plate (54) of the cartridge base forms a hook-like crimped formation (57, 58), having a first section (57) which extends away from the cartridge housing cover (5) in an axial direction, and having a second section (58) which adjoins said first section and which extends in a radial direction, wherein the insertion opening (103) is arranged on the housing (100) such that the second section (58) can be inserted into said insertion opening and, in the inserted state, secures the cartridge in an axial direction by way of a form fit.

2. Device according to one of the preceding claims, **characterized in that** the crimped formation, which can be inserted at least in sections into the insertion opening, has a relative-rotation prevention means (30, 31) .

3. Device according to Claim 2, **characterized in that** the relative-rotation prevention means is formed by a hole (31) in the crimped formation and by a locking element, in particular a locking pin, which is seated in the hole (31).

4. Device according to Claim 3, **characterized in that** the relative-rotation prevention means is formed as a flattened portion (30), in sections, of the crimped formation.

5. Device according to one of the preceding claims, **characterized**
(a) **in that** the drying agent cartridge can be fastened to the housing of the air treatment installation only by way of a form fit; and/or
(b) **in that** the drying agent cartridge has no thread, in particular no thread arranged on the cartridge base, for the purposes of screwing the cartridge to the housing of the air treatment installation.

6. Motor vehicle, in particular utility vehicle, having a device according to one of the preceding claims.

## Revendications

1. Dispositif de fixation amovible d'une cartouche d'agent siccatif (1) sur un boîtier (100) d'une installation de traitement d'air comprimé d'un véhicule, en particulier d'un véhicule utilitaire, comprenant :
un bordage (6 ; 26b ; 57, 58) sur le fond de cartouche (2) de la cartouche d'agent siccatif (1), qui présente une surface d'appui (9) ; et
une ouverture d'enfichage (101 ; 102 ; 103) sur le boîtier (100) de l'installation de traitement d'air comprimé, dans laquelle le bordage (6 ; 26b ; 57, 58) peut être enfiché au moins en partie et est fixé par engagement par correspondance géométrique dans la direction axiale dans l'état enfiché ;
**caractérisé**
a) **en ce que** un élargissement du pli de connexion (26) entre le fond de cartouche (2) et le couvercle de boîtier de cartouche (5) est prévu, formé par une patte de bordage (26b) s'étendant radialement, qui entoure du côté de la périphérie la région bordée (26a) entre le fond de cartouche (2) et le couvercle de boîtier de cartouche (5) et qui est formé par un bordage à 180° de la tôle de bordage (4) du fond de cartouche (2), l'ouverture d'enfichage (102) étant disposée de telle sorte que la patte de bordage (26b) puisse être enfichée au moins en partie dans l'ouverture d'enfichage (102) ; ou
b) **en ce qu'**une tôle de bordage (54) du fond de cartouche constitue un bordage en forme de crochet (57, 58), avec une première portion (57) qui s'étend à l'écart du couvercle de boîtier de cartouche (5) dans la direction axiale, et avec une deuxième portion (58) s'y raccordant, qui s'étend dans la direction radiale, l'ouverture d'enfichage (103) étant disposée sur le boîtier (100) de telle sorte que la deuxième portion (58) puisse être enfichée dans celle-ci et, dans l'état enfiché, fixe la cartouche par engagement par correspondance géométrique dans la direction axiale.

2. Dispositif selon l'une quelconque des revendications précédentes, **caractérisé en ce que** le bordage pouvant être enfiché au moins en partie dans l'ouverture d'enfichage présente une fixation antirotation (30, 31).

3. Dispositif selon la revendication 2, **caractérisé en ce que** la fixation antirotation est formée par un trou (31) dans le bordage et un élément de verrouillage reposant dans le trou (31), en particulier une goupille de verrouillage.

4. Dispositif selon la revendication 3, **caractérisé en ce que** la fixation antirotation est réalisée sous forme de méplat partiel (30) du bordage.

5. Dispositif selon l'une quelconque des revendications précédentes, **caractérisé**
(a) **en ce que** la cartouche d'agent siccatif peut être fixée uniquement par un engagement par correspondance géométrique sur le boîtier de l'installation de traitement d'air ; et/ou
(b) **en ce que** la cartouche d'agent siccatif ne présente pas de filetage, en particulier pas de filetage disposé au niveau du fond de cartouche, pour visser la cartouche sur le boîtier de l'installation de traitement d'air.

6. Véhicule automobile, en particulier véhicule utilitaire, comprenant un dispositif selon l'une quelconque des revendications précédentes.
